# EUROPÄISCHE PATENTSCHRIFT

(11) **EP 0 479 876 B1**
(45) Veröffentlichungstag und Bekanntmachung des Hinweises auf die Patenterteilung: **05.10.1994**
(21) Anmeldenummer: 90910673.4
(22) Anmeldetag: 25.06.1990
(51) Int. Cl.: F16H 61/26, F16H 63/38, G05G 5/05

(54) **SCHALTEINRICHTUNG FÜR EIN MEHRGÄNGIGES ZAHNRÄDER-WECHSELGETRIEBE EINES KRAFTFAHRZEUGS**
GEARSHIFT DEVICE FOR A MULTIPLE-GEAR GEAR CHANGE BOX IN A MOTOR VEHICLE
DISPOSITIF D'ENCLENCHEMENT POUR BOITE DE VITESSES A ENGRENAGES A VITESSES MULTIPLES DE VEHICULES A MOTEUR

(30) Priorität: 29.06.1989 DE 3921359; 02.04.1990 DE 4010549
(43) Veröffentlichungstag der Anmeldung: 15.04.1992
(73) Patentinhaber: ZF FRIEDRICHSHAFEN Aktiengesellschaft, 88038 Friedrichshafen (DE)
(72) Erfinder: SCHETTER, Martin, D-7122 Besigheim (DE); BÜHLMAIER, Fritz, D-7070 Schwäbisch Gmünd (DE)
(86) Internationale Anmeldenummer: EP9001005
(87) Internationale Veröffentlichungsnummer: WO9100448

(56) Entgegenhaltungen:
- EP-A- 144 554
- DE-B- 2 801 182
- GB-A- 2 037 916
- "MUNCIE, HM-290 Series Manual Transmissions" GMC 1987

## Beschreibung

Die Erfindung bezieht sich nach dem Oberbegriff des Patentanspruchs 1 auf eine Schalteinrichtung für ein mehrgängiges Zahnräder-Wechselgetriebe eines Kraftfahrzeugs mit einer zentralen Wähl- und Schaltwelle, die im Getriebegehäuse verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind, mit einer als Hebel ausgebildeten Wählschwinge, in deren Nabe die Wähl- und Schaltwelle über in axial verlaufende Führungsnuten der Nabe eingreifende Wälzkörper drehfest und axial verschiebbar geführt ist, und die gegen die Kraft zumindest eines gehäusefesten Federelements aus ihrer Neutral- in eine Wählendstellung verschwenkbar ist.

Eine Schalteinrichtung der vorgenannten Gattung ist bekannt aus der Druckschrift "Muncie, HM-290 Series Manual Transmissions", Seiten 1-40 und 1-42, wobei an der Wähl- und Schaltwelle über radiale Stifte Mitnahmerollen angeordnet sind, die in Längsnuten der Wählschwinge eingreifen. Wird mittels eines Schalthebels eine Schaltgasse angewählt, so erfolgt eine Verdrehung der Wähl- und Schaltwelle, bei der die Mitnahmerollen die Wählschwinge aus ihrer mittleren Neutralstellung heraus jeweils gegen die gehäusefesten Federelemente bewegen. Bei der anschließenden Schaltbewegung wird die Wähl- und Schaltwelle axial verschoben, so daß die Mitnahmerollen in den Führungsnuten der Nabe abrollen. Die Mitnahmerollen müssen innerhalb der Führungsnuten radiales Spiel haben, damit sie sich beim Abrollen an einer der beiden Laufbahnen der jeweiligen Führungsnut gegenüber der anderen Laufbahn frei bewegen können. Wäre dieses radiale Spiel nicht vorhanden, so würden die Mitnahmerollen in den Führungsnuten klemmen. Durch dieses radiale Spiel entsteht in Wählrichtung in der Schalteinrichtung ein Leerweg, der in nachteiliger Weise Vibrationen am Schalthebel zuläßt.

Der Erfindung liegt die Aufgabe zugrunde, eine spielfreie und reibungsarme Mitnahme- und Längsverschiebung zwischen Wähl- bzw. Schaltwelle und Wählschwinge zu schaffen.

Diese Aufgabe wird nach dem kennzeichnenden Teil des Anspruchs 1 dadurch gelöst, daß die Wähl- bzw. Schaltwelle Führungsnuten aufweist und die Wälzkörper als Kugeln ausgebildet sind, welche im radialen Zwischenraum zwischen der Nabe und der Wähl- bzw. Schaltwelle in mehreren in axialer Richtung verlaufenden Reihen in einem zylindrischen Käfig angeordnet sind und mit einem Teil ihrer Oberfläche formschlüssig sowohl in Führungsnuten der Nabe als auch der Wähl- bzw. Schaltwelle geführt sind. In die Nabe ist ein gezogener Blechring eingepreßt, der Führungsnuten und Kugeln aufweist. Somit entfällt eine aufwendige Wärmebehandlung der Wählschwinge, da dieser Blechring einsatzgehärtet sein kann. Eine derartige Linearführung ist in der Lage, die Wähl- bzw. Schaltwelle und die Wählschwinge völlig spielfrei zueinander zu fixieren. Die in Reihen am Umfang der Wähl- bzw. Schaltwelle angeordneten Kugeln sorgen für eine kippfreie Lagerung der Elemente zueinander, so daß eine geringe Reibung zwischen denselben auftritt. Dadurch ist eine erhebliche Reduzierung der Schaltkräfte möglich. Die durch Drehungleichförmigkeit des Antriebsmotors auf das Kraftfahrzeuggetriebe übertragenden Schwingungen führen aufgrund der spielfreien Drehmitnahme zwischen Nabe und Wähl- bzw. Schaltwelle nicht mehr zu Vibrationen des Schalthebels.

Aus der Druckschrift DE-B-2 801 182 ist zwar eine längenveränderliche Antriebswelle bekannt, bei der ein äußeres Wellenteil gegenüber einem inneren Wellenteil mittels einer Linearführung verschiebbar ist; diese Einrichtung ist aber für eine teleskopierbare Antriebswelle vorgesehen.

Die im nebengeordneten Anspruch 2 angegebene Erfindung bezieht sich auf eine Schalteinrichtung für ein mehrgängiges Zahnräder-Wechselgetriebe eines Kraftfahrzeugs, die im wesentlichen mit der Schalteinrichtung nach dem Oberbegriff des Anspruchs 1 übereinstimmt, bei der aber die Wähl- bzw. Schaltwelle in der Nabe über zylindrische Wälzkörper geführt ist.

Die der Erfindung zugrunde liegende Aufgabe soll nach dem kennzeichnenden Teil dieses nebengeordneten Anspruchs 2 dadurch gelöst werden, daß die Wähl- bzw. Schaltwelle Führungsnuten aufweist, daß die Führungsnuten von Nabe sowie Wähl- bzw. Schaltwelle V-förmig ausgebildet sind, wobei die in einem Käfig geführten Wälzkörper an jeweils zueinander parallelen Wälzbahnen der V-förmigen Führungsnuten abrollen, und daß sich Drehachsen einander benachbarter Wälzkörper unter einem Winkel von 90° kreuzen. Auch mit dieser Art der Führung, bei der über die zylindrischen Wälzkörper eine Drehmomentabstützung der Verriegelungsschwinge auf der Wähl- bzw. Schaltwelle in beiden Schwenkrichtungen erfolgt, läßt sich Spiel zwischen den Bauelementen bei gleichzeitiger reibungsarmer Längsverschiebung vermeiden.

In den Ansprüchen 3 und 4 sind vorteilhafte Ausgestaltungen der Anordnung nach Anspruch 2 beschrieben. Gemäß Anspruch 3 können sich Drehachsen von Wälzkörpern, die in einer Querebene der Nabe liegen, unter einem Winkel von 90° kreuzen. Wenn die Wähl- bzw. Schaltwelle und die Nabe mit jeweils zwei Führungsnuten versehen sind, so bewirkt eine entsprechende Anordnung der beiden in einer Querebene liegenden Wälzkörper eine Drehmomentabstützung in beiden Drehrichtungen.

Nach Anspruch 4 können alternativ dazu die in einer Reihe angeordneten Wälzkörper eine Drehmomentabstützung in beiden Drehrichtungen herbeiführen. Zu diesem Zweck sind die Wälzkörper abwechselnd um jeweils 90° verschwenkt in der jeweiligen Führungsnut angeordnet, so daß alle Seitenwände der Führungsnut als Wälzbahnen verwendet werden.

Gemäß dem unabhängingen Anspruch 5 soll die Wähl- und Schaltwelle zumindest über einen axialen Bereich, an dem sie innerhalb der Nabe der Wählschwinge verschiebbar geführt ist, als gerades Prisma ausgebildet sein, wobei die Nabe Führungsflächen aufweis, die parallel zu den Seitenflächen des Prismas verlaufen, und zwischen den Seitenflächen und den Führungsflächen sollen rollenförmige in einem der Querschnittsform des Prismas angepaßten Käfig geführte Wälzkörper angeordnet sein. Dieses Prisma weist mehrere ebene und in axialer Richtung der Wähl und Schaltwelle verlaufende Seitenflächen auf, die einfach herstellbar sind und auf einfache Weise durch rollenförmige Wälzkörper gegenüber den Führungsflächen der Nabe abgestützt werden können. In vorteilhafter Weise kann dabei nach Anspruch 6 das Prisma eine gleichseitige dreieckige Grundfläche aufweisen. Die auf eine derartige dreieckige Grundfläche bezogenen Seitenflächen des Prismas lassen sich nach Anspruch 7 in einfacher Weise durch Taumelpressen herstellen.

Nach Anspruch 8 wird ein Verfahren zur Herstellung einer Wählschwinge angegeben, bei dem die Nuten in der Nabe durch spanlose oder spanabhebende Bearbeitung hergestellt werden und beim anschließenden Einpressen des Blechringes dieser derart in die Nuten hinein verformt wird, daß er an seinem inneren Umfang Führungsnuten mit hoher Genauigkeit aufweist. Die genaue Kontur des Blechringes wird wegen seiner geringen Gestaltfestigkeit aufgrund seiner dünnen Wandstärke nach dem Einpressen von der nicht gehärteten und deshalb genauen Nabe bestimmt, so daß sich Härteverzüge des Blechringes nicht negativ bemerkbar machen. Durch den Ziehvorgang während der Herstellung des Blechringes wird eine hohe Oberflächengüte an den Führungsnuten erreicht.

Schließlich wird nach Anspruch 9 ein Verfahren zur Herstellung einer Wähl- und Schaltwelle, die mit den Merkmalen des Anspruchs 1 ausgebildet ist, vorgeschlagen, wonach die Führungsnuten der Wähl- und Schaltwelle durch Kaltumformung im Wälzverfahren hergestellt werden. Mit diesem für die Herstellung von Verzahnungen bekannten Verfahren kann eine hohe Genauigkeit erzielt werden. Durch die Kaltumformung steigt die Festigkeit des vorvergüteten Werkstoffs der Wähl- und Schaltwelle derart an, daß ein Härteverfahren entfallen kann. Die gewalzten Führungsnuten haben eine extrem hohe Oberflächenqualität, die ein sehr gutes Ablaufverhalten gewährleistet.

Zur weiteren Erläuterung der Erfindung wird auf die Zeichnung verwiesen, in der zwei Ausführungsbeispiele vereinfacht dargestellt sind. Es zeigen
- Fig. 1: einen Abschnitt eines Getriebegehäuses mit einem Teil einer zentralen Wähl- bzw. Schaltwelle, die in diesem Bereich in einer Wählschwinge verschiebbar geführt ist,
- Fig. 2: einen Querschnitt gemäß Linie II-II in Fig. 1,
- Fig. 3: eine weitere Ausgestaltung, bei der die Wähl- bzw. Schaltwelle in einer Wählschwinge über zylindrische Wälzkörper längsverschiebbar geführt ist, im Querschnitt,
- Fig. 4: eine Ausführung, die im wesentlichen mit der Schalteinrichtung nach Fig. 4 übereinstimmt, bei der sich aber innerhalb einer dargestellten Reihe von zylindrischen Wälzkörpern deren einzelne Drehachsen kreuzen,
- Fig. 5: eine Seitenansicht einer im wesentlichen mit den Fig. 1 und 2 übereinstimmenden Wählschwinge, in die ein Blechring eingepreßt ist,
- Fig. 6: eine Seitenansicht einer Wählschwinge mit einem Querschnitt durch eine Wähl- und Schaltwelle in ihrem als dreieckiges Prisma ausgebildeten Bereich und
- Fig. 7: einen Teilschnitt durch eine Nabe der Wählschwinge gemäß Linie VII-VII.

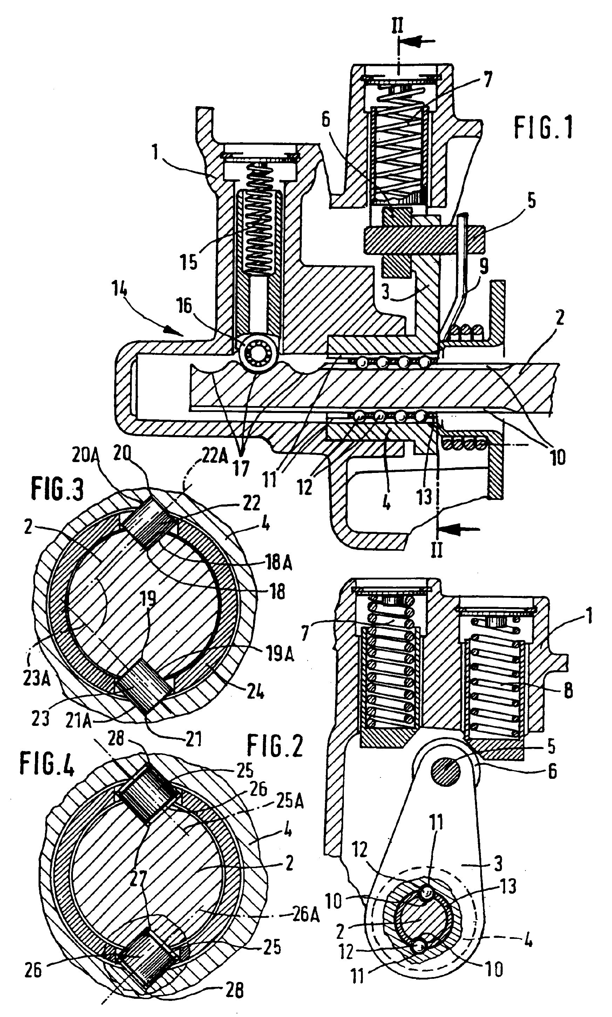

In den Fig. 1 und 2 ist mit 1 ein stirnseitiger Endabschnitt eines Getriebegehäuses bezeichnet, in dem eine zentrale Wähl- bzw. Schaltwelle 2 geführt ist. Diese Wähl- bzw. Schaltwelle 2 wird während der Wahl einer Schaltgasse mittels eines nicht dargestellten Schalthebels verdreht und beim anschließenden Schalten einer innerhalb dieser Schaltgasse liegenden Gangstufe axial verschoben. Die Wähl- bzw. Schaltwelle 2 nimmt nicht näher bezeichnete Schaltfinger auf, die je nach Ausbildung der Schaltung in mit Schaltgabeln verbundene Schaltschienen selektiv eingreifen oder in unmittelbar an Schaltmuffen angreifenden Schaltschwingen selektiv die Gangschaltung vollziehen.

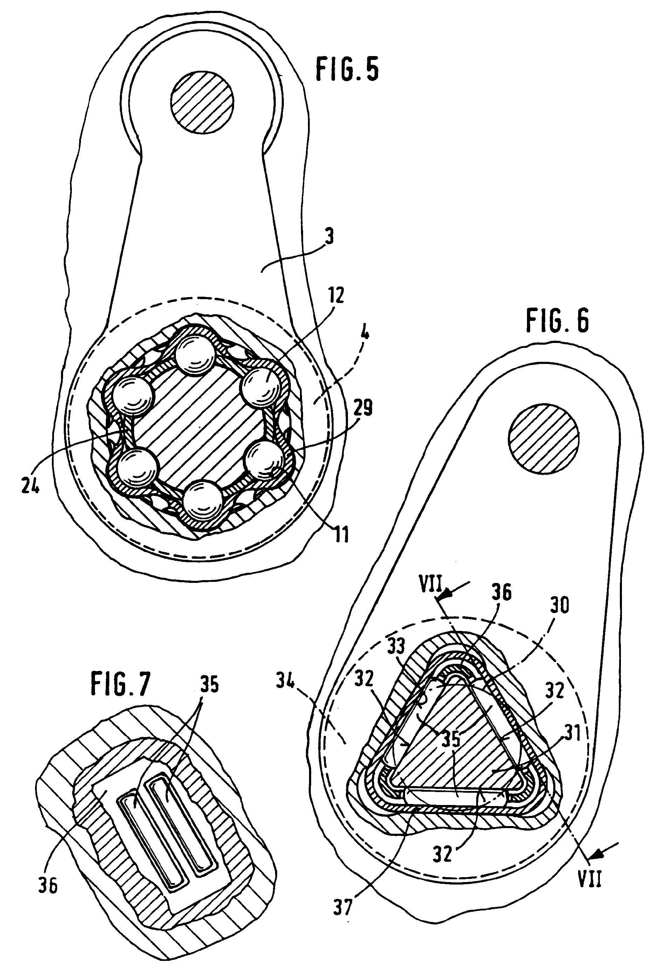

In dem Getriebegehäuse ist weiterhin eine als einarmiger Hebel ausgebildete Wählschwinge 3 mittels ihrer Nabe 4 verdrehbar gelagert. Diese Wählschwinge 3 nimmt an ihrem radial vorstehenden Ende eine auf einem Bolzen 5 gelagerte Rolle 6 auf, die, wie insbesondere aus den Fig. 2 und 4 hervorgeht, gegen in ihrem Schwenkbereich liegende, im Getriebegehäuse 1 angeordnete Federelemente 7 und 8 bewegbar ist. Zur Erzeugung einer Wählkraft dient außerdem eine Schenkelfeder 9, die sich ebenfalls am Getriebegehäuse 1 abstützt und mit ihrem einen Ende an dem die Rolle 6 lagernden Bolzen 5 angreift.

Die Wähl- bzw. Schaltwelle 2 nach der ersten Ausgestaltung der Erfindung weist, wie den Fig. 1 und 2 zu entnehmen ist, radiale Führungsnuten 10 auf. Die Nabe 4 der Wählschwinge 3 ist ebenfalls mit Führungsnuten versehen, die mit 11 bezeichnet sind und in einer radialen Ebene mit den Führungsnuten 10 der Wähl- bzw. Schaltwelle 2 liegen. In die Führungsnuten 10 und 11, sowohl der Wähl- bzw. Schaltwelle 2 als auch der Nabe 4, greifen jeweils mit einem Teil ihrer Oberfläche Kugeln 12 ein, die in einem radial zwischen der Nabe 4 sowie der Wähl- bzw. Schaltwelle 2 angeordneten zylindrischen Käfig 13 geführt sind. Bei der bereits erläuterten Verdrehung der Wähl- bzw. Schaltwelle 2 bewirken die in den Führungsnuten 10 und 11 anliegenden Kugeln 12 einen Formschluß zur Wählschwinge 3, und die Wählschwinge 3 wird folglich an ihrem als radialer Hebel ausgebildeten Ende derart verschwenkt, daß die Rolle 6 eines der beiden Federelemente 7 oder 8 in das Getriebegehäuse 1 schiebt. Bei der anschließenden Axialverschiebung der Wähl- bzw. Schaltwelle 2 rollen die im Käfig 13 geführten Kugeln 12 in den Führungsnuten 10 und 11 ab. Zur Festlegung der Wähl- bzw. Schaltwelle 2 in ihren axialen Neutral- und Schaltstellungen dient eine Schaltrastierung 14, deren über eine Feder 15 druckbeaufschlagte Rastrolle 16 in an der Wähl- bzw. Schaltwelle 2 angebrachte Vertiefungen 17 eingreift.

Mit der in den Fig. 1 und 2 dargestellten Längsführung zwischen der Nabe 4 und der Wähl- bzw. Schaltwelle 2 läßt sich eine spielfreie Drehmomentübertragung realisieren, so daß Schwingungen im Schalthebel, die aus einem Leerweg in Drehrichtung dieser beiden Elemente resultieren, vermieden werden können. Die Wähl- bzw. Schaltwelle 2 ist außerdem über einen relativ großen axialen Bereich mit einer geringen Lagerreibung geführt, wodurch die Schaltkräfte insgesamt reduzierbar sind.

Das weitere Ausgestaltungsbeispiel nach Fig. 3 unterscheidet sich von der in den Fig. 1 und 2 dargestellten Anordnung dadurch, daß die Wähl- bzw. Schaltwelle 2 und die Nabe 4 der Wählschwinge 3 jeweils zwei V-förmige Führungsnuten 18 bzw. 19 und 20 bzw. 21 aufweisen. Die Führungsnuten 18 und 20 sowie 19 und 21 nehmen jeweils gemeinsam eine Reihe von zylindrischen Wälzkörpern 22 und 23 auf. Die Wälzkörper 22 rollen bei einer Längsbewegung der Wähl- bzw. Schaltwelle 2 auf einer Wälzbahn 18A der Führungsnut 18 und auf einer Wälzbahn 20A der Führungsnut 20 ab. In entsprechender Weise sind für die Wälzkörper 23 in den Führungsnuten 19 und 21 Wälzbahnen 19A und 21A vorhanden. Damit zwischen den beiden Reihen von Wälzkörpern 22 und 23 eine Drehmomentabstützung erzielt wird, sind die Wälzbahnen 18A und 19A der Wähl- bzw. Schaltwelle 2 und die Wälzbahnen 20A und 21A der Nabe 4 jeweils in Umfangsrichtung einander abgewandt und infolge dessen kreuzen sich Drehachsen 22A und 23A der Wälzkörper 22 und 23 in einem Winkel von 90°. Die Reihen zylindrischer Wälzkörper 22 und 23 sind in einem zwischen der Nabe 4 und der Wähl- bzw. Schaltwelle 2 angeordneten Käfig 24 geführt.

Bei dem Ausgestaltungsbeispiel nach Fig. 4 sind zylindrische Wälzkörper 25 und 26 in V-förmigen Führungsnuten 27 und 28 von Wähl- bzw. Schaltwelle 2 und Nabe 4 angeordnet. Die Wälzkörper 25 nehmen dabei gegenüber den Wälzkörpern 26 eine um 90° versetzte Einbaulage ein, so daß sich zwangsläufig ihre Drehachsen 25A und 26A unter 90° kreuzen. Zur Verdeutlichung dieser um 90° verschwenkten Einbaulage der Wälzkörper 25 und 26 sind in der Fig. 4 die Wähl- bzw. Schaltwelle 2 und die Nabe 4 um einen Wälzkörper versetzt geschnitten. Da betragsmäßig der Durchmesser der Wälzkörper 25 und 26 größer als deren axiale Baulänge ist, laufen sie stirnseitig nicht an die Wälzbahnen der Führungsnuten 27 und 28 an.

In der Fig. 5 ist eine Wählschwinge 3 in der Seitenansicht dargestellt, in deren Nabe 4 ein Blechring 29 eingepreßt ist. Dieser Blechring bildet Führungsnuten 11, in denen die als Kugeln 12 ausgebildeten Wälzkörper angeordnet sind. Bei der Herstellung der Wählschwinge 3 werden zunächst in der Nabe 4, d. h. am Umfang von deren Bohrung, Nuten durch spanabehebende Bearbeitung oder spanlose Bearbeitung, z. B. Sintern, hergestellt, und es wird anschließend der Blechring 29 in die Nabe eingepreßt, wobei der Blechring 29 aufgrund des Einpreßvorgangs anschließend entsprechende Führungsnuten 11 aufweist.

Eine weitere Ausgestaltung der Erfindung ist in der Fig. 6 dargestellt. Dabei ist eine Wähl- und Schaltwelle 30 über einen Bereich als dreieckiges Prisma ausgebildet. Dieses Prisma weist Seitenflächen 32 auf, wobei zwischen den Seitenflächen 32 und parallel zu diesen verlaufenden Führungsflächen 33 einer Nabe 34 rollenförmige Wälzkörper 35 angeordnet sind. Zur Führung dieser rollenförmigen Wälzkörper 35 dient ein Käfig 36, dessen Kontur dem Verlauf der Seitenflächen 32 und der Führungsflächen 33 angepaßt ist. Dem Teilschnitt in der Fig. 7 ist zu entnehmen, daß die rollenförmigen Wälzkörper quer zu der axialen Bewegungsrichtung der Wähl- und Schaltwelle 30 angeordnet sind.

Der hebelförmig ausgebildete Abschnitt der Wählschwinge 3 kann als Blechstanzteil hergestellt sein, das auf die Nabe 4 aufgepreßt ist. Weiterhin bildet ein in die Nabe 34 eingepreßter Blechring 37 die Führungsflächen 33.

### Bezugszeichen

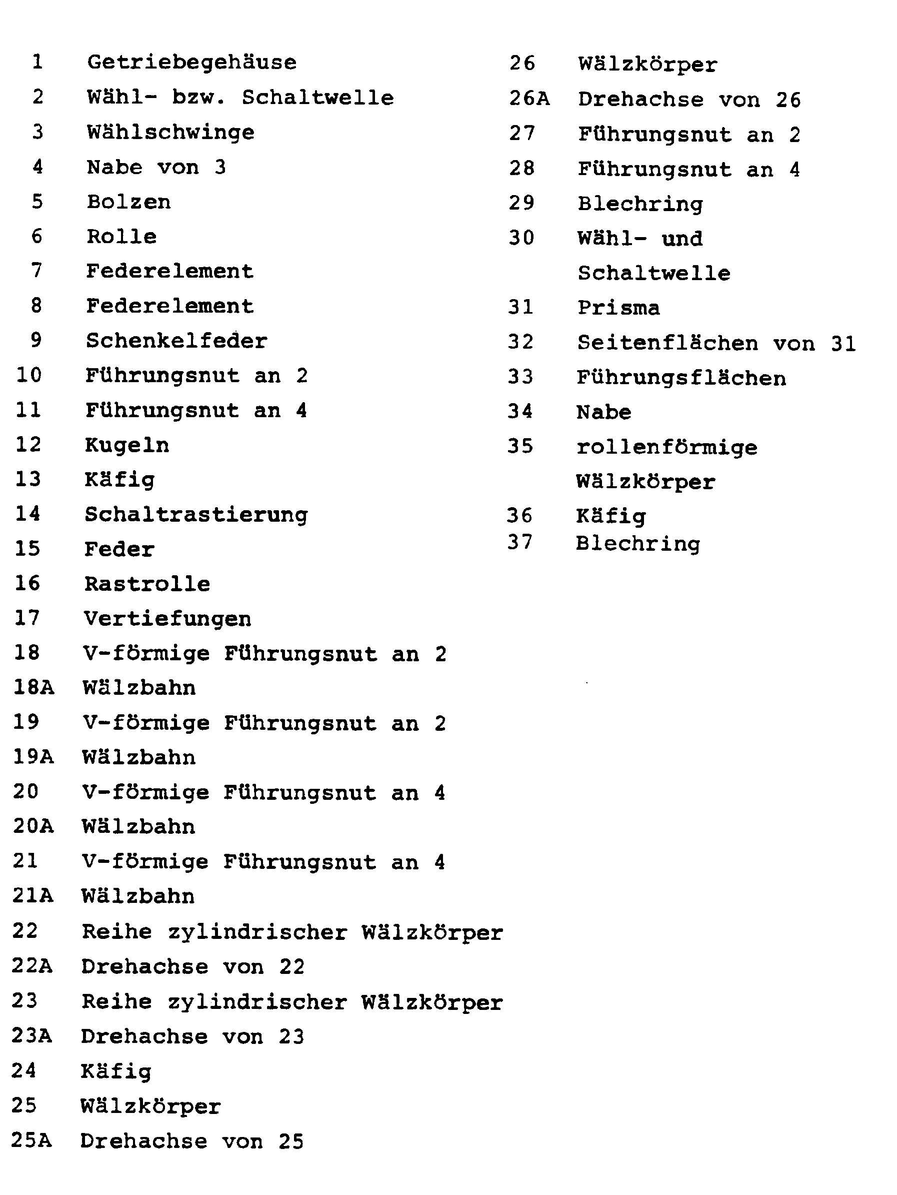

## Patentansprüche

1. Schalteinrichtung für ein mehrgängiges Zahnräder-Wechselgetriebe eines Kraftfahrzeugs mit einer zentralen Wähl- bzw. Schaltwelle (2), die im Getriebegehäuse (1) verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind, mit einer als Hebel ausgebildeten Wählschwinge (3), in deren Nabe (4) die Wähl- bzw. Schaltwelle (2) über in axial verlaufende Führungsnuten der Nabe (4) eingreifende Wälzkörper drehfest und axial verschiebbar geführt ist, und die gegen die Kraft zumindest eines gehäusefesten Federelements (7 und 8) aus ihrer Neutral- in eine Wählendstellung verschwenkbar ist, dadurch **gekennzeichnet**, daß die Wähl- bzw. Schaltwelle (2) Führungsnuten (10) aufweist und die Wälzkörper als Kugeln (12) ausgebildet sind, welche im radialen Zwischenraum zwischen der Nabe (4) und der Wähl- bzw. Schaltwelle (2) in mehreren in axialer Richtung verlaufenden Reihen in einem zylindrischen Käfig (13) angeordnet sind und mit einem Teil ihrer Oberfläche formschlüssig in Führungsnuten (11 und 10) sowohl der Nabe (4) als auch der Wähl- und Schaltwelle geführt sind, wobei in die Nabe (4) ein Blechring (29) eingepreßt ist, der Führungsnuten (11) für die Kugeln (12) aufweist.

2. Schalteinrichtung für ein mehrgängiges Zahnräder-Wechselgetriebe eines Kraftfahrzeugs mit einer zentralen Wähl- und Schaltwelle (2), die im Getriebegehäuse (1) verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind, mit einer als Hebel ausgebildeten Wählschwinge (3), in deren Nabe (4) die Wähl- und Schaltwelle (2) über in axial verlaufende Führungsnuten der Nabe (4) eingreifende zylindrische Wälzkörper drehfest und axial verschiebbar geführt ist, und die gegen die Kraft zumindest eines gehäusefesten Federelements (7 und 8) aus ihrer Neutral- in eine Wählendstellung verschwenkbar ist, dadurch **gekennzeichnet**, daß die Wähl- bzw. Schaltwelle (2) Führungsnuten (18 und 19, 27) aufweist, daß die Führungsnuten (18, 19, 20 und 21, 27 und 28) von Nabe (4) sowie Wähl- bzw. Schaltwelle (2) V-förmig ausgebildet sind, wobei die in einem Käfig (21) geführten Wälzkörper (22 und 23, 25 und 26) an jeweils zueinander parallelen Wälzbahnen (18A und 20A) der V-förmigen Führungsnuten abrollen, und daß sich Drehachsen einander benachbarter Wälzkörper (22 und 23) unter einem Winkel von 90° kreuzen.

3. Schalteinrichtung nach Anspruch 2, dadurch **gekennzeichnet,** daß sich Drehachsen von Wälzkörpern (22 und 23), die in einer Querebene der Nabe (4) liegen, unter einem Winkel von 90° kreuzen.

4. Schalteinrichtung nach Anspruch 2, dadurch **gekennzeichnet**, daß sich Drehachsen von in einer Reihe angeordneten Wälzkörpern (25 oder 26) sich jeweils unter einem Winkel von 90° kreuzen, wobei die Wälzkörper (25 oder 26) der jeweiligen Reihe einen Durchmesser aufweisen, der größer als ihre axiale Erstreckung ist.

5. Schalteinrichtung für ein mehrgängiges Zahnräderwechselgetriebe eines Kraftfahrzeugs mit einer zentralen Wähl- bzw. Schaltwelle (30), die im Getriebegehäuse verdrehbar und axial verschiebbar ist, wobei durch deren Verdrehung jeweils eine in einer Schaltgasse zu betätgigende Schaltkupplung anwählbar und durch deren anschließende axiale Verschiebung Gangstufen schaltbar sind, mit einer als Hebel ausgebildeten Wählschwinge, in deren Nabe (34) die Wähl- bzw. Schaltwelle (30) über Wälzkörper drehfest und axial verschiebbar geführt ist und die gegen die Kraft zumindest eines gehäusefesten Federelements aus ihrer Neutral- in eine Wählendstellung verschwenkbar ist, dadurch **gekennzeichnet**, daß die wähl- und Schaltwelle (30) zumindest über einen axialen Bereich, an dem sie innerhalb der Nabe (34) der Wählschwinge verschiebbar geführt ist, als gerades Prisma (31) ausgebildet ist, daß die Nabe (34) Führungsflächen (33) aufweist, die parallel zu Seitenflächen (32) des Prismas (31) verlaufen und daß zwischen den Seitenflächen (32) und den Führungsflächen (33) rollenförmige in einem der Querschnittsform des Prismas angepaßten Käfig (36) geführte Wälzkörper (35) angeordnet sind.

6. Schalteinrichtung nach Anspruch 5, dadurch **gekennzeichnet**, daß das Prisma (31) einen gleichseitigen dreieckigen Querschnitt aufweist.

7. Schalteinrichtung nach Anspruch 6, dadurch **gekennzeichnet**, daß die dreieckige Form des Prismas (31) durch Kaltumformung, vorzugsweise Taumelpressen, herstellbar ist.

8. Verfahren zur Herstellung einer Wählschwinge (3) nach Anspruch 1 dadurch **gekennzeichnet**, daß in der Nabe (4) durch spanabhebende Bearbeitung oder spanlose Bearbeitung, vorzugsweise Sintern, Nuten hergestellt werden und daß beim anschließenden Einpressen des Blechringes (29) dieser derart in die Nuten hinein verformt wird, daß er an seinem inneren Umfang Führungsnuten (11) aufweist.

9. Verfahren zur Herstellung einer Wähl- und Schaltwelle (2) nach Anspruch 1, dadurch **gekennzeichnet**, daß die Führungsnuten (10) der Wähl- und Schaltwelle (2) durch Kaltumformung im Walzverfahren hergestellt werden.

## Claims

1. Gearshift device for a multiple-gear change box of a motor vehicle with a central selector shaft (2) which is rotatable and axially displaceable within the gearbox casing (1), whereby as a result of the rotation of said central selector shaft in each case a clutch to be actuated in a gearshift channel can be selected and as a result of the subsequent axial displacement of said central selector shaft gear levels can be shifted, with a selector rocker (3) designed as a lever, in the hub (4) of which selector rocker the selector shaft (2) is guided in non-rotating and axially displaceable manner via roller bodies engaging in axial guide grooves of the hub (4), and which is capable of being pivoted against the force of at least one spring element (7 and 8), fixed in relation to the casing, out of its neutral position into a selector end position, characterised in that the selector shaft (2) exhibits guide grooves (10) and the roller bodies take the form of balls (12) which are arranged in the radial clearance between the hub (4) and the selector shaft (2) in several rows proceeding in the axial direction within a cylindrical cage (13) and which are guided by positive closure with a part of their surface in guide grooves (11 and 10) in both the hub (4) and the selector shaft, whereby a sheet-metal ring (29) exhibiting guide grooves (11) for the balls (12) is pressed into the hub (4).

2. Gearshift device for a multiple-gear change box of a motor vehicle with a central selector shaft (2) which is rotatable and axially displaceable within the gearbox casing (1), whereby as a result of the rotation of said central selector shaft in each case a clutch to be actuated in a gearshift channel can be selected and as a result of the subsequent axial displacement of said central selector shaft gear levels can be shifted, with a selector rocker (3) designed as a lever, in the hub (4) of which selector rocker the selector shaft (2) is guided in non-rotating and axially displaceable manner via cylindrical roller bodies engaging in axial guide grooves of the hub (4), and which is capable of being pivoted against the force of at least one spring element (7 and 8), fixed in relation to the casing, out of its neutral position into a selector end position, characterised in that the selector shaft (2) exhibits guide grooves (18 and 19, 27), in that the guide grooves (18, 19, 20 and 21, 27 and 28) in the hub (4) and the selector shaft (2) are V-shaped, whereby the roller bodies (22 and 23, 25 and 26) guided in a cage (21) roll along on roller tracks (18A and 20A), which in each case are parallel to one another, of the V-shaped guide grooves, and in that axes of rotation of roller bodies (22 and 23) which are adjacent to one another intersect at an angle of 90°.

3. Gearshift device according to Claim 2, characterised in that axes of rotation of roller bodies (22 and 23) which are located in a transverse plane of the hub (4) intersect at an angle of 90°.

4. Gearshift device according to Claim 2, characterised in that axes of rotation of roller bodies (25 or 26) arranged in a row intersect in each case at an angle of 90°, whereby the roller bodies (25 or 26) of each row exhibit a diameter which is greater than their axial extent.

5. Gearshift device for a multiple-gear change box of a motor vehicle with a central selector shaft (30) which is rotatable and axially displaceable within the gearbox casing, whereby as a result of the rotation of said central selector shaft in each case a clutch to be actuated in a gearshift channel can be selected and as a result of the subsequent axial displacement of said central selector shaft gear levels can be shifted, with a selector rocker designed as a lever, in the hub (34) of which selector rocker the selector shaft (30) is guided in non-rotating and axially displaceable manner via roller bodies and which is capable of being pivoted against the force of at least one spring element, fixed in relation to the casing, out of its neutral position into a selector end position, characterised in that the selector shaft (30), at least within an axial region on which it is guided displaceably within the hub (34) of the selector rocker, takes the form of a right prism (31), in that the hub (34) exhibits guide surfaces (33) which proceed parallel to lateral surfaces (32) of the prism (31) and in that between the lateral surfaces (32) and the guide surfaces (33) roller-shaped guided roller bodies (35) are arranged in a cage (36) which is adapted to the cross-sectional shape of the prism.

6. Gearshift device according to Claim 5, characterised in that the prism (31) exhibits an equilateral triangular cross-section.

7. Gearshift device according to Claim 6, characterised in that the triangular shape of the prism (31) can be produced by cold deformation, preferably by tumble pressing.

8. Process for producing a selector rocker (3) according to Claim 1, characterised in that grooves are produced in the hub (4) by metal-removing machining or by non-cutting processing, preferably sintering, and in that when the sheet-metal ring (29) is subsequently pressed in it is deformed into the grooves in such a way that it exhibits guide grooves (11) on its inner circumference.

9. Process for producing a selector shaft (2) according to Claim 1, characterised in that the guide grooves (10) of the selector shaft (2) are produced by cold deformation in a rolling process.

## Revendications

1. Dispositif d'enclenchement pour boîte de vitesses à engrenages à plusieurs vitesses dans un véhicule à moteur, comportant un arbre central de sélection et d'enclenchement (2) qui est pivotant et coulissant axialement dans le carter de boîte (1), de sorte que son pivotement permet de sélectionner un embrayage d'enclenchement correspondant, à actionner dans un couloir de changement de vitesses, et que son coulissement axial subséquent permet d'enclencher des vitesses, et comportant un sélecteur oscillant (3) agencé en levier, dans un moyeu (4) duquel l'arbre de sélection et d'enclenchement (2) est monté de manière fixe en rotation et coulissante axialement par l'entremise de corps roulants engagés dans des gorges de guidage s'étendant en direction axiale dans le moyeu (4), le sélecteur oscillant étant susceptible de pivoter de sa position neutre à une position finale de sélection contre la force d'au moins un élément à ressort (7 et 8) fixé dans le carter, **caractérisé** en ce que l'arbre de sélection et d'enclenchement (2) comporte des gorges de guidage (10) et en ce que les corps roulants sont formés par des billes (12) disposées en plusieurs rangées en direction axiale dans une cage cylindrique (13) dans l'intervalle radial entre le moyeu (4) et l'arbre (2) et guidées positivement par une partie de leur surface dans des gorges de guidage (11 et 10) ménagées respectivement dans le moyeu (4) et dans l'arbre, et où un anneau en tôle (29) comportant les gorges (11) de guidage des billes (12) est inséré à force dans le moyeu (4).

2. Dispositif d'enclenchement pour boîte de vitesses à engrenages à plusieurs vitesses dans un véhicule à moteur, comportant un arbre central de sélection et d'enclenchement (2) qui est pivotant et coulissant axialement dans le carter de boîte (1), de sorte que son pivotement permet de sélectionner un embrayage d'enclenchement correspondant, à actionner dans un couloir de changement de vitesses, et que son coulissement axial subséquent permet d'enclencher des vitesses, et comportant un sélecteur oscillant (3) agencé en levier, dans un moyeu (4) duquel l'arbre de sélection et d'enclenchement (2) est monté de manière fixe en rotation et coulissante axialement par l'entremise de corps roulants cylindriques engagés dans des gorges de guidage s'étendant en direction axiale dans le moyeu (4), le sélecteur oscillant étant susceptible de pivoter de sa position neutre à une position finale de sélection contre la force d'au moins un élément à ressort (7 et 8) fixé dans le carter, **caractérisé** en ce que l'arbre de sélection et d'enclenchement (2) comporte des gorges de guidage (18 et 19, 27), en ce que les gorges de guidage (18, 19, 20 et 21, 27 et 28) du moyeu (4) et de l'arbre (2) sont en forme de V, les corps roulants (22 et 23, 25 et 26) étant guidés dans une cage (21) et roulant sur des chemins de roulement (18A et 20A) mutuellement parallèles des gorges de guidage en V, et en ce que des axes de rotation de corps roulants adjacents (22 et 23) se croisent à 90°.

3. Dispositif d'enclenchement selon la revendication 2, **caractérisé** en ce que des axes de rotation de corps roulants (22 et 23) qui se trouvent dans un plan transversal du moyeu (4) se croisent à 90°.

4. Dispositif d'enclenchement selon la revendication 2, **caractérisé** en ce que des axes de rotation de corps roulants (25 ou 26) disposés en une rangée se croisent respectivement à 90°, les corps roulants (25 ou 26) de ladite rangée ayant un diamètre plus grand que leur longueur axiale.

5. Dispositif d'enclenchement pour boîte de vitesses à engrenages à plusieurs vitesses dans un véhicule à moteur, comportant un arbre central de sélection et d'enclenchement (30) qui est pivotant et coulissant axialement dans le carter de boîte, de sorte que son pivotement permet de sélectionner un embrayage d'enclenchement correspondant, à actionner dans un couloir de changement de vitesses, et que son coulissement axial subséquent permet d'enclencher des vitesses, et comportant un sélecteur oscillant agencé en levier, dans un moyeu (34) duquel l'arbre de sélection et d'enclenchement (30) est monté de manière fixe en rotation et coulissante axialement par l'entremise de corps roulants, le sélecteur oscillant étant susceptible de pivoter de sa position neutre à une position finale de sélection contre la force d'au moins un élément à ressort fixé dans le carter, **caractérisé** en ce que l'arbre de sélection et d'enclenchement (30) a la forme d'un prisme droit (31) au moins dans une zone axiale où il est guidé de manière coulissante à l'intérieur du moyeu (34) du sélecteur oscillant, en ce que le moyeu (34) comporte des surfaces de guidage (33) s'étendant parallèlement aux faces latérales (32) du prisme (31), et en ce que des corps roulants (35) en forme de rouleaux sont disposés entre lesdites faces latérales (32) et lesdites surfaces de guidage (33) dans une cage (36) adaptée à la forme de la section transversale du prisme.

6. Dispositif d'enclenchement selon la revendication 5, **caractérisé** en ce que le prisme (31) a une section transversale en triangle équilatéral.

7. Dispositif d'enclenchement selon la revendication 6, **caractérisé** en ce que la forme triangulaire du prisme (31) est réalisée par formage à froid, de préférence par pressage à nutation.

8. Procédé de fabrication d'un sélecteur oscillant (3) selon la revendication 1, **caractérisé** en ce que l'on réalise des gorges dans le moyeu (4) par usinage avec ou sans enlèvement de copeaux, de préférence par frittage, et en ce que lors de l'insertion subséquente à force de l'anneau en tôle (29) dans les gorges, celui-ci est déformé dans les gorges de telle façon qu'il présente des gorges de guidage (1) sur sa face intérieure.

9. Procédé de fabrication d'un arbre de sélection et d'enclenchement (2) selon la revendication 1, **caractérisé** en ce que les gorges de guidage (10) de l'arbre de sélection et d'enclenchement (2) sont réalisées par formage à froid dans un procédé de laminage.
